# EUROPÄISCHE PATENTSCHRIFT

(11) **EP 4 495 456 B1**
(45) Veröffentlichungstag und Bekanntmachung des Hinweises auf die Patenterteilung: **12.08.2026**
(21) Anmeldenummer: 24187006.2
(22) Anmeldetag: 08.07.2024
(51) Int. Cl.: F16H 7/02, F16H 55/17

(54) **ZAHNSCHEIBE**
TOOTH WASHER
DISQUE DENTAIRE

(30) Priorität: 17.07.2023 DE 102023206740
(43) Veröffentlichungstag der Anmeldung: 22.01.2025
(73) Patentinhaber: ContiTech Deutschland GmbH, 30175 Hannover (DE)
(72) Erfinder: Lorenz, Eduard, 30175 Hannover (DE); Kucharczyk, Andre, 30175 Hannover (DE); Göser, Hubert, 30175 Hannover (DE)
(74) Vertreter: Preusser, Andrea

(56) Entgegenhaltungen:
- DE-A1- 102019 213 096
- DE-A1- 102019 213 105
- TW-B- I 577 903
- US-A- 4 218 932

## Beschreibung

Die Erfindung betrifft eine Zahnscheibe gemäß dem Oberbegriff des Anspruchs 1. Weiterhin betrifft die Erfindung einen Zahnriementrieb mit einer solchen Zahnscheibe sowie ein Zweirad mit einem solchen Zahnriementrieb.

Zahnriemen können wesentlich höhere Drehmomente als vergleichbare Flach- der Keilriemen übertragen, sind aber auch anfällig gegenüber Störungen des Zahneingriffs durch Verschmutzungen. Bei einem geschlossenen Zahnprofil können die Zähne des Antriebsriemens zwar optimal an der Zahnscheibe anliegen, es können sich jedoch im Zahnprofil Fremdkörper ansammeln. Dies kann den Kontakt zwischen dem Riemen bzw. dessen Zähnen und der Zahnscheibe beeinträchtigen und insbesondere die Tiefe des Profils der Zahnscheibe derart verringern, dass es zu einem Überspringen des Riemens gegenüber der Zahnscheibe kommen kann. Auch kann der Riemen hierdurch erhöhte Knickbelastungen erfahren, wodurch der Riemen mechanisch geschwächt werden kann und das Risiko eines Versagens, z. B. durch Reißen des Riemens, erhöht wird.

Daher sind Zahnriementriebe mit Zahnscheiben, die an ihrem Zahngrund zum Inneren der Zahnscheibe weisende Öffnungen zur Abfuhr von Fremdkörpern oder Verschmutzungen aufweisen, so genannte offene Zahnscheiben, im Stand der Technik bekannt bei z.B. Zahnriemenantrieben für Zweiräder oder für andere Antriebs- oder Fördersysteme in rauen, steinigen oder staubigen Umgebungen.

Ganz allgemein betrachtet ergeben sich beim Umlauf während des kämmenden Eingriffs der Zahnpaarung zwischen Zahnscheibe und Zahnriemen - abhängig von der Kinematik und der Zahnprofilgestaltung - natürlich gänzlich andere Eingriffsverhältnisse als z.B. beim Abwälzen ineinandergreifender Zahnräder mit der dort üblichen Evolventenverzahnung. So können bei einem Riementrieb die Profilgestaltungen von Zahnriemen und Zahnscheibe entweder so ausgebildet sein, dass die Riemenstege des Zahnriemens, also die Bereiche zwischen den Riemenzähnen, sich auf den Zahnköpfen der der Scheibenverzahnung abstützen, oder so, dass sich der Zahnriemen mit seiner Zahnkopffläche in den Zahnlücken der Scheibenverzahnung abstützt.

Bei manchen Anwendungen und insbesondere auch bei Veränderungen der Eingriffsverhältnisse durch Ablagerungen oder Verschmutzungen zwischen den Zähnen treten beide Auflagen oder Abstützungen in einem mehr oder weniger unkontrollierbaren Zusammenspiel auf. Bei den offenen Zahnscheiben ist das zwar weniger der Fall, führt aber auch dort zu erhöhtem Verschleiß der Riemen und Räder. Eine Auflage der Riemenstege des Zahnriemens auf den Zahnköpfen der Scheibenverzahnung gilt dabei generell als weniger vorteilhaft.

Einer der Nachteile offener Zahnriemenscheiben besteht allerdings gerade darin, dass die Riemen, bedingt durch die Öffnungen am Zahngrund der Scheibe, eher mit dem Riemenstegen auf den Zahnköpfen der Scheibenverzahnung aufliegen. Dies kann zu Belastungen des Riemenkörpers und insbesondere der im Riemen eingebetteten Zugträger führen, was die Lebensdauer des Riemens verkürzen kann.

Ein weiterer Nachteil besteht darin, dass auch die Öffnungen bei offenen Zahnscheiben Probleme bereiten können. So kann es passieren, dass bei zu großen Öffnungen, d.h. bei einem zu breit ausgefrästen Zahngrund, sich die Riemenzähne bei hoher Belastung in die Öffnung eindrücken und ein sauberes Auslaufen aus der Verzahnung nicht mehr möglich ist. Demgegenüber erlaubt zwar eine kleine Öffnung eine vorschriftsmäßige Anlage des Zahnriemens an die Zähne der Zahnscheibe, jedoch ist es dann möglich, dass Verschmutzungen zwischen den Zähnen nicht mehr ausgetragen werden können. Die richtige Auslegung und Anpassung sind also überaus schwierig.

Die DE 10 2019 213 096 A1 betrifft eine Zahnscheibe mit an ihrem Zahngrund über einen Teil der Zahnbreite zum Inneren der Zahnscheibe weisenden Öffnungen zur Abfuhr von Fremdkörpern oder Verschmutzungen zwischen den Zähnen. Jeweils eine der Zahnflanken eines Zahnes der Zahnscheibe weist ein Stützprofil zur teilweisen Aufnahme eines Zahnkopfs des Zahnriemens auf und die andere Zahnflanke ein Leit- oder Führungsprofil zur Ableitung von Fremdkörpern oder Verschmutzungen.

Nachteiliger Weise stützt sich der Zahnriemen nur mit Teilen seiner Zahnkopffläche auf den Stützprofilen der Scheibenverzahnung ab, was weiterhin zu einer ungleichmäßigen Verteilung mechanischer Spannungen im Riemen führen kann.

Um ein durch Querkräfte verursachtes Ablaufen der Zahnriemen von den Zahnscheiben zu verhindern, werden in aller Regel Führungselemente, oft ausgebildet als ringförmige, seitlich an der Zahnscheibe befestigte Kränze, so genannte Bordscheiben, vorgesehen. Dies ist insbesondere bei Schrägverzahnungen der Fall, die zwar ein geräuschärmeres Laufverhalten zeigen als Geradverzahnungen, die aber eben durch die inhärente Axialkraftkomponente zum Ablaufen von Riemenscheiben neigen können. Aber auch bei geradverzahnten Zahnriementrieben sind Sicherungen gegen Ablaufen durch Querkräfte wichtig, so beispielsweise bei Zahnriemenantrieben von Zweirädern.

Die DE 10 2019 213 105 A1 betrifft eine Zahnscheibe mit ein- oder beidseitig angeordneten Führungselementen für den Zahnriemen, wobei die Führungselemente als eine Vielzahl von Führungsflanschen ausgebildet sind, die über den Umfang der Zahnscheibe verteilt angeordnet und über jeweils einen Teilumfang der Zahnscheibe ausgebildet sind, wobei die Führungsflansche mindestens einen der Zahnzwischenräume über mindestens einen Teilbereich der Zahnhöhe seitlich begrenzen. Die Zahnscheibe weist an ihrem Zahngrund über einen Teil der Zahnbreite zum Inneren der Zahnscheibe Öffnungen zur Abfuhr von Fremdkörpern oder Verschmutzungen zwischen den Zähnen auf.

Eine andere Möglichkeit zur Führung von Zahnriemen ist die so genannte Mittenführung. Dabei sind Führungsprofile im Verzahnungsbereich vorgesehen. Die EP 2 289 792 A1 zeigt hierzu ein selbstzentrierendes System, bei dem der Riemen mit einer Vertiefung oder Nut in der Mitte seiner Verzahnung ausgebildet ist und die Zahnriemenscheibe einen mittig zwischen den Zahnflanken verlaufenden, vorspringenden Zentrierungssteg oder -flansch aufweist, der beim Umlauf in die Nut des Zahnriemens eingreift.

Ein ähnliches System offenbart die US 2018 003273 A1, bei der ebenfalls zwischen den Zahnflanken der Riemenscheibe eine ansteigende Finne zum Eingriff in eine in der Riemenverzahnung ausgebildete Nut vorgesehen ist.

Die TW I577903 B offenbart eine weitere Variante eines Riemenantriebs, wobei der Riemen über eine Führungsrille der Riemenscheibe zwangsgeführt wird.

Nachteiliger Weise stützt sich der Zahnriemen in den bekannten Lösungen nur mit den Stegen des Zahnriemens auf den Zahnköpfen der Scheibenverzahnung ab, was zu punktuell hohen Belastungen im Zahnriemen und bzw. oder zu einer ungleichmäßigen Verteilung mechanischer Spannungen im Riemen führen kann.

Die der Erfindung zugrundeliegende Aufgabe besteht darin, eine Zahnscheibe für einen Zahnriementrieb bereitzustellen, die zwischen den Zähnen der Zahnscheibe ansammelnden Schmutz abführen kann und gleichzeitig im Vergleich zu bekannten Lösungen einen verbesserten Eingriff mit der Verzahnung eines Zahnriemens aufweist, sodass eine gleichmäßigere mechanische Spannungsverteilung innerhalb des Zahnriemens gewährleistet werden kann. Zusätzlich oder alternativ soll die Zahnscheibe einfach und bzw. oder kostengünstig herstellbar sein und in Zusammenspiel mit einem Zahnriemen hohe Leistungen übertragen können. Zusätzlich oder alternativ soll der die Zahnscheibe umschlingende Zahnriemen durch die Zahnscheibe seitlich geführt werden können.

Die Lösung dieser Aufgabe ergibt sich durch eine Zahnscheibe mit den Merkmalen des unabhängigen Anspruchs 1.

Weitere vorteilhafte Ausbildungen sind in den abhängigen Ansprüchen offenbart, sowie der allgemeinen Beschreibung sowie den Ausführungsbeispielen zu entnehmen.

Die vorliegende Anmeldung betrifft eine Zahnscheibe für einen Zahnriementrieb, bei dem ein Zahnriemen mit seiner verzahnten Antriebsseite die Zahnscheibe umlaufend umschlingt und die Verzahnungen von Zahnscheibe und Zahnriemen kämmend ineinandergreifen, wobei die Zahnscheibe jeweils an einem Zahnzwischenraum zwischen zwei Zähnen über einen Teil einer Zahnbreite zum Inneren der Zahnscheibe weisende Öffnungen zur Abfuhr von Fremdkörpern oder Verschmutzungen und einen in Umfangsrichtung umlaufenden Führungssteg zur Führung des Zahnriemens in axialer Richtung aufweist. Die Zahnscheibe weist wenigstens einen in Umfangsrichtung jeweils zwischen zwei Zähnen angeordneten Steg auf, wobei der Steg zur zumindest teilweisen Aufnahme eines Zahnkopfs des Zahnriemens ausgebildet ist. Der Führungssteg weist eine sich in radialer Richtung erstreckende Einlaufschräge auf.

Der Führungssteg kann mit anderen Worten in radialer Richtung keilförmig ausgebildet sein, wobei sich die Breite des Führungsstegs in radialer Richtung nach innen keilförmig vergrößert. Hierdurch kann auf vorteilhafte Weise das Einlaufen des Führungsstegs in eine korrespondierende Führungsnut eines Zahnriemens bei Schiefstellung bzw. bei Versatz einzelner Riemenscheiben zueinander verbessert werden.

Der Führungssteg weist eine sich in axialer Richtung erstreckende Breite auf. Die Breite des Führungsstegs ist kleiner als die Zahnbreite und kleiner als die Breite des Stegs ausgebildet.

Durch den Steg kann der Zahnkopf des Zahnriemens über dessen Breite zumindest teilweise aufgenommen bzw. gestützt werden, wodurch eine Auflage der Riemenstege des Zahnriemens auf den Zahnköpfen der Scheibenverzahnung vermieden werden kann. Mit anderen Worten stützt sich der Zahnriemen mit einer Teilbreite seiner Zahnkopffläche auf dem Steg der Scheibenverzahnung ab, wodurch der Zahnriemen gleichmäßig belastet wird. Hierdurch kann der Verschleiß des Zahnriemens reduziert und bzw. oder die Lebensdauer des Zahnriemens verlängert werden. Zusätzlich oder alternativ kann der Zahnriemen eine höhere Leistung übertragen.

Die Zahnscheibe kann einteilig oder mehrteilig ausgeführt sein. Die Fertigung mehrerer Einzelteile, welche im Nachhinein zu einer Zahnscheibe zusammensetzbar oder zusammenfügbar sind, kann insbesondere bei besonders komplexen Geometrien oder Hinterschneidungen der Zahnscheibe zu einer einfacheren und kostengünstigeren Herstellung führen.

Zahnriemen können zwar wesentlich höhere Drehmomente als vergleichbare Flach- der Keilriemen übertragen, sind aber auch anfällig gegenüber Störungen des Zahneingriffs durch Verschmutzungen, Bei einem geschlossenem Zahnprofil können die Zähne des Antriebsriemens zwar optimal an der Zahnriemenscheibe anliegen, es können sich jedoch im Zahnprofil Fremdkörper ansammeln. Dies kann den Kontakt zwischen dem Riemen bzw. dessen Zähnen und der Zahnriemenscheibe beeinträchtigen und insbesondere die Tiefe des Profils der Zahnriemenscheibe derart verringern, dass es zu einem Überspringen der Zähne des Riemens gegenüber der Zahnscheibe kommen kann oder der Riemen aufgrund von mechanischer Schwächung durch eine zunehmende Knickbelastung reißen kann. Das kann durch die Öffnungen der erfindungsgemäßen Zahnscheibe auf vorteilhafte Weise sicher vermieden werden.

Gemäß einem weiteren Aspekt der vorliegenden Erfindung ist eine Breite des Stegs kleiner der Zahnbreite. Auf vorteilhafte Weise kann so eine ausreichend große Öffnung zur Schmutzableitung gewährleistet werden. Die maximale Tiefe bzw. Breite der Öffnung ergibt sich aus der Subtraktion der Breite des Stegs von der Zahnbreite.

Vorzugsweise ist die Zahnscheibe symmetrisch ausgebildet, sodass der Steg mittig angeordnet ist und sich eine Öffnung von dem Steg und bzw. oder dem Zahnscheibenkörper in axialer Richtung nach links und eine Öffnung von dem Steg und bzw. oder dem Zahnscheibenkörper in axialer Richtung nach rechts erstreckt. In diesem Ausführungsbeispiel ergibt sich die maximale Tiefe bzw. Breite der linken Öffnung bzw. der rechten Öffnung aus der Subtraktion der Breite des Stegs von der Zahnbreite, dividiert durch zwei. Die Tiefe bzw. Breite der Öffnungen kann über Radien auslaufen und in einer durch die Zahnseitenflächen aufgespannten Ebene münden. Mit anderen Worten kann sich die Tiefe bzw. Breite der Öffnungen in Umfangsrichtung von einem Maximalwert auf einen Wert von Null annähern oder diesen erreichen.

Die Zahnscheibe kann in Bezug auf ihre Zenitebene zweigeteilt ausgebildet sein. Damit vereinfacht sich die Herstellung der Zahnscheibe dadurch, dass zwei ähnliche oder gleiche Teile hergestellt werden, die dann zu einer Zahnscheibe zusammengeführt werden können.

Gemäß einem weiteren Aspekt der vorliegenden Erfindung verbindet der Steg zwei Zähne miteinander. So kann auf vorteilhafte Weise sichergestellt werden, dass der Zahnkopf des Zahnriemens zumindest auf einem Teilbereich der Zahnriemenbreite vollständig durch den Steg gestützt bzw. durch diesen aufgenommen wird.

Gemäß einem weiteren Aspekt der vorliegenden Erfindung verbindet der Führungssteg zwei Zähne miteinander. So kann auf vorteilhafte Weise sichergestellt werden, dass der Zahnriemen zumindest auf einem Teilbereich der Zahnriemenlänge in axialer Richtung bzw. Querrichtung durch die Zahnscheibe geführt werden kann. Die Möglichkeit einer großflächigen Aufnahme von Querkräften kann auf vorteilhafte Weise eine gleichmäßige Krafteinleitung in den Zahnriemen über einen möglichst großen Querschnitt ermöglichen, wodurch dem Auftreten von Spannungsspitzen vorgebeugt werden kann.

Durch eine solche Ausbildung des Führungsstegs kann auf die Verwendung von Bordscheiben zur Führung des Zahnriemens in axialer Richtung bzw. in Querrichtung verzichtet und trotzdem auf eine sehr effektive Weise eine Zwangsführung des Zahnriemens erreichet werden.

Gemäß einem weiteren Aspekt der vorliegenden Erfindung entspricht die Höhe des Führungsstegs in radialer Richtung maximal der Höhe der Zähne. Auf besonders bevorzugte Weise ist die Höhe des Führungsstegs in radialer Richtung geringer als die Höhe der Zähne ausgebildet. Je kleiner die Höhe des Führungsstegs ausgebildet ist, umso kleiner kann die Tiefe der in dem Zahnriemen angeordneten und mit dem Führungssteg korrespondierend im Eingriff stehenden Nut ausgebildet sein, wodurch der Zahnriemen in seiner mechanischen Belastbarkeit wiederum nur geringfügig geschwächt wird.

Gemäß einem weiteren Aspekt der vorliegenden Erfindung weist der Führungssteg Ausnehmungen zur Schmutzabfuhr auf. Vorzugsweise ist zwischen zwei Zähnen jeweils eine Ausnehmung angeordnet. Die Ausnehmungen können mit anderen Worten gesagt als eine in axialer Richtung verlaufende Bohrung ausgebildet sein, die den Führungssteg in dessen gesamter Breite durchlaufen. Hierdurch kann auf vorteilhafte Weise die Abfuhr von sich in den Zahnzwischenräumen angesammelten Schmutz verbessert werden. Zudem kann durch die Ausnehmungen das Gewicht der Riemenscheibe reduziert werden.

Gemäß einem weiteren Aspekt der vorliegenden Erfindung weist die Zahnscheibe einen Zahnscheibenkörper auf, von dem die Zähne der Zahnscheibe in axialer Richtung ein- oder beidseitig auskragend ausgebildet sind. Die Zahnscheibenzähne sind am Zahnfuß lediglich über einen Teil der Zahnbreite mit dem Zahnscheibenkörper bzw. dem Steg verbunden. Neben der dadurch erreichbaren Gewichtsersparnis lässt sich angepasst an die jeweilige Belastungssituation und Leistungsübertragung einerseits eine ausreichende Abstützung und Momentenübertragung durch den Zahnriemen erreichen und andererseits eine sichere und saubere Abfuhr von Verschmutzungen, da sich durch die Auskragung entsprechend große Öffnungen im Zahnfußbereich bilden.

Die Erfindung betrifft außerdem einen Zahnriementrieb mit einer erfindungsgemäßen Zahnscheibe und einem Zahnriemen, wobei der Zahnriemen eine in Umfangsrichtung verlaufende Nut aufweist, wobei der Führungssteg der Zahnscheibe ausgebildet ist, in die Nut des Zahnriemens einzugreifen und den Zahnriemen in axialer Richtung zu führen. Die zuvor genannten Eigenschaften und Vorteile lassen sich so auf jeden beliebigen Zahnriementrieb übertragen, der vorzugsweise in einer verschmutzten Umgebung eingesetzt werden kann.

Die zuvor genannten Eigenschaften und Vorteile lassen sich auch auf ein Zweirad, insbesondere ein Fahrrad oder ein Motorrad sowie deren Derivate mit einem erfindungsgemäßen Zahnriementrieb übertragen.

Der Zahnriementrieb ist in den zuvor genannten Anwendungen oft ungeschützt einer staubigen oder schmutzigen Umgebung ausgesetzt. Die erfindungsgemäße Ausführung stellt dann eine sichere Riemenführung sowie eine ausreichende Leistungsübertragung auch bei Verschmutzungen bereit.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des Anspruchs 1 kombinierbar sind.

Anhand der Zeichnungen werden im Folgenden Ausführungsbeispiele der Erfindung schematisch dargestellt und näher erläutert.

Darin zeigt:
- Fig. 1: eine erfindungsgemäße Zahnscheibe.
- Fig. 2: eine Teilansicht der erfindungsgemäßen Zahnscheibe gemäß Fig. 1.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U. Die Längsachse X, die radiale Richtung R und die Umfangsrichtung U können gemeinsam auch als Raumrichtungen X, R, U bzw. als zylindrische Raumrichtungen X, R, U bezeichnet werden.

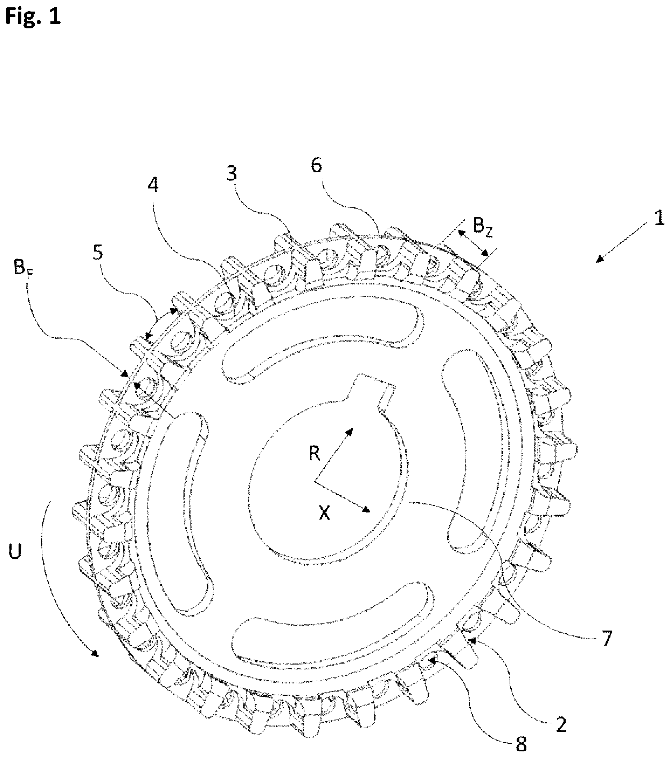

Fig. 1 zeigt schematisch und in einer perspektivischen Darstellung eine erfindungsgemäße Zahnscheibe 1 eines Zahnriementriebs.

Die Zahnscheibe 1 weist einen in Umfangsrichtung U jeweils zwischen zwei Zähnen 3 angeordneten Steg 4 auf, wobei der Steg 4 zur zumindest teilweisen Aufnahme eines Zahnkopfs eines Zahnriemens ausgebildet ist. Der Steg 4 verbindet jeweils zwei in Umfangsrichtung U nebeneinander angeordnete Zähne 3 der Zahnscheibe 1 miteinander.

Der Steg 4 weist eine Breite auf, wobei die Stegbreite kleiner einer Breite Bz eines Zahns 3 der Zahnscheibe 1 ist. Die Größe einer Öffnung 2 zur Schmutzabführung zwischen zwei Zähnen 3 ergibt sich aus der Subtraktion der Breite des Stegs 4 von der Zahnbreite Bz. Da die Zahnscheibe 1 symmetrisch ausgebildet ist, ist der Steg 4 mittig angeordnet, sodass sich die Öffnung 2 von einem Zahnscheibenkörper 7 und bzw. oder Steg 4 in axialer Richtung X bzw. entlang der Längsachse nach links und eine Öffnung 2 von dem Zahnscheibenkörper 7 und bzw. oder dem Steg 4 in axialer Richtung bzw. entlang der Längsachse X nach rechts erstreckt. So ergibt sich die maximale Tiefe der linken Öffnung 2 bzw. der rechten Öffnung 2 aus der Subtraktion der Breite des Stegs 4 von der Zahnbreite Bz, dividiert durch zwei. Die Tiefe der Öffnungen 2 läuft über Radien aus und mündet in einer durch die Zahnseitenflächen aufgespannten Ebene.

Die Zahnscheibe 1 weist einen Führungssteg 6 auf, wobei der Führungssteg 6 zwischen jeweils zwei Zähnen 3 angeordnet ist die in Umfangsrichtung U jeweils zwei benachbarten Zähne 3 miteinander verbindet. Die Höhe des Führungsstegs 6 entspricht in radialer Richtung R der Höhe der Zähne 3. Der Führungssteg 6 weist eine sich in axialer Richtung X erstreckende Breite B_{F} auf. Die Breite des Führungsstegs B_{F} ist kleiner als die Zahnbreite Bz und kleiner als die Breite des Stegs 4 ausgebildet. Der Führungssteg 6 weist zudem Ausnehmungen 8 zur Schmutzabfuhr auf, wobei jeweils zwischen zwei Zähnen 3 eine Ausnehmung 8 angeordnet ist. Die Ausnehmungen 8 sind als eine in axialer Richtung X verlaufende Bohrung ausgebildet, die den Führungssteg 6 in dessen gesamter Breite durchlaufen. Hierdurch kann auf vorteilhafte Weise die Abfuhr von sich in den Zahnzwischenräumen 5 angesammelten Schmutz verbessert werden.

Die Zahnscheibe 1 besitzt an ihrem Zahngrund über einen Teil der Zahnbreite Bz zum Inneren der Zahnscheibe 1 weisende Öffnungen 2, nämlich zur Abfuhr von Fremdkörpern oder Verschmutzungen zwischen den Zähnen 3. Die Zähne 3 der Zahnscheibe 1 sind beidseitig auskragend von dem Zahnscheibenkörper 7 ausgebildet.

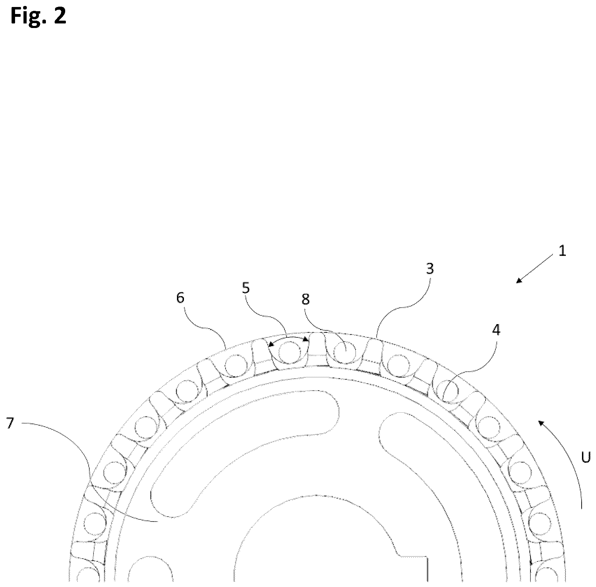

Fig. 2 zeigt eine Teilansicht der erfindungsgemäßen Zahnscheibe 1 gemäß Fig. 1 von der Seite. Deutlich erkennbar sind der Führungssteg 6, der Zahnscheibenkörper 7, sowie die sich in radialer Richtung R in den Zahnzwischenräumen 5 erstreckenden Stege 4.

### Bezugszeichenliste (Teil der Beschreibung)

- 1: Zahnscheibe
- 2: Öffnung
- 3: Zahn
- 4: Steg
- 5: Zahnzwischenraum
- 6: Führungssteg
- 7: Zahnscheibenkörper
- 8: Ausnehmung zur Schmutzabfuhr

- B_{F}: Breite des Führungsstegs
- Bz: Zahnbreite
- R: radiale Richtung
- U: Umfangsrichtung
- X: Längsachse, axiale Richtung

## Patentansprüche

1. Zahnscheibe (1) für einen Zahnriementrieb, bei dem ein Zahnriemen mit seiner verzahnten Antriebsseite die Zahnscheibe (1) umlaufend umschlingt und die Verzahnungen von Zahnscheibe (1) und Zahnriemen kämmend ineinandergreifen,
wobei die Zahnscheibe (1) jeweils an einem Zahnzwischenraum (5) zwischen zwei Zähnen (3) über einen Teil einer Zahnbreite (Bz) zum Inneren der Zahnscheibe (1) weisende Öffnungen (2) zur Abfuhr von Fremdkörpern oder Verschmutzungen aufweist,
wobei die Zahnscheibe (1) einen in Umfangsrichtung (U) umlaufenden Führungssteg (6) zur Führung des Zahnriemens in axialer Richtung (X) aufweist, wobei
die Zahnscheibe (1) wenigstens einen in Umfangsrichtung (U) jeweils zwischen zwei Zähnen (3) angeordneten Steg (4) aufweist, wobei der Steg (4) zur zumindest teilweisen Aufnahme eines Zahnkopfs (10) des Zahnriemens ausgebildet ist,
**dadurch gekennzeichnet, dass**
der Führungssteg (6) eine sich in radialer Richtung (R) erstreckende Einlaufschräge aufweist.

2. Zahnscheibe (1) nach Anspruch 1,
**dadurch gekennzeichnet, dass**
eine Breite des Stegs (4) kleiner der Zahnbreite (Bz) ist.

3. Zahnscheibe (1) nach einem der vorhergehenden Ansprüche,
**dadurch gekennzeichnet, dass**
der Steg (4) zwei Zähne (3) miteinander verbindet.

4. Zahnscheibe (1) nach einem der vorhergehenden Ansprüche,
**dadurch gekennzeichnet, dass**
das der Führungssteg (6) zwei Zähne (3) miteinander verbindet.

5. Zahnscheibe (1) nach einem der vorhergehenden Ansprüche,
**dadurch gekennzeichnet, dass**
die Höhe des Führungsstegs (6) in radialer Richtung (R) maximal der Höhe der Zähne (3) entspricht.

6. Zahnscheibe (1) nach einem der vorhergehenden Ansprüche,
**dadurch gekennzeichnet, dass**
der Führungssteg (6) Ausnehmungen (8) zur Schmutzabfuhr aufweist.

7. Zahnscheibe (1) nach einem der vorhergehenden Ansprüche,
**dadurch gekennzeichnet, dass**
die Zahnscheibe (1) einen Zahnscheibenkörper (7) aufweist, von dem die Zähne (3) der Zahnscheibe (1) in axialer Richtung (X) ein- oder beidseitig auskragend ausgebildet sind.

8. Zahnriementrieb mit einer Zahnscheibe (1) nach einem der Ansprüche 1 bis 7 und einem Zahnriemen, wobei der Zahnriemen eine in Umfangsrichtung (U) verlaufende Nut aufweist,
wobei der Führungssteg (6) der Zahnscheibe (1) ausgebildet ist, in die Nut des Zahnriemens einzugreifen und den Zahnriemen in axialer Richtung (X) zu führen.

9. Zweirad mit einem Zahnriementrieb nach Anspruch 8.

## Claims

1. Toothed pulley (1) for a toothed belt drive, wherein a toothed belt wraps circumferentially around the toothed pulley (1) with its toothed driving side and the toothings of the toothed pulley (1) and the toothed belt mesh with one another,
wherein the toothed pulley (1) has, in each tooth space (5) between two teeth (3), openings (2) extending over part of a tooth width (Bz) and pointing toward the interior of the toothed pulley (1) for discharging foreign bodies or contaminants,
wherein the toothed pulley (1) has a circumferentially (U) extending guide rib (6) for guiding the toothed belt in an axial direction (X), wherein
the toothed pulley (1) comprises at least one web (4) arranged in the circumferential direction (U) between two teeth (3), the web (4) being configured for at least partially receiving a tooth tip (10) of the toothed belt,
**characterized in that**
the guide rib (6) has a lead in chamfer extending in the radial direction (R).

2. Toothed pulley (1) according to claim 1,
**characterized in that**
a width of the web (4) is smaller than the tooth width (Bz).

3. Toothed pulley (1) according to any one of the preceding claims,
**characterized in that**
the web (4) connects two teeth (3).

4. Toothed pulley (1) according to any one of the preceding claims,
**characterized in that**
the guide rib (6) connects two teeth (3).

5. Toothed pulley (1) according to any one of the preceding claims,
**characterized in that**
the height of the guide rib (6) in the radial direction (R) is at most equal to the height of the teeth (3).

6. Toothed pulley (1) according to any one of the preceding claims,
**characterized in that**
the guide rib (6) comprises recesses (8) for dirt discharge.

7. Toothed pulley (1) according to any one of the preceding claims,
**characterized in that**
the toothed pulley (1) comprises a pulley body (7) from which the teeth (3) of the toothed pulley (1) are formed so as to project cantilevered in the axial direction (X) on one or both sides.

8. Toothed belt drive comprising a toothed pulley (1) according to any one of claims 1 to 7 and a toothed belt, wherein the toothed belt comprises a groove extending in the circumferential direction (U),
wherein the guide rib (6) of the toothed pulley (1) is configured to engage in the groove of the toothed belt and to guide the toothed belt in the axial direction (X).

9. Two wheeled vehicle comprising a toothed belt drive according to claim 8.

## Revendications

1. Poulie dentée (1) pour une transmission par courroie dentée, dans laquelle une courroie dentée entoure la poulie dentée (1) de manière circonférentielle par son côté d'entraînement denté et dans laquelle les dentelures de la poulie dentée (1) et de la courroie dentée s'engrènent,
dans laquelle la poulie dentée (1) présente, dans chaque espace interdentaire (5) entre deux dents (3), des ouvertures (2) s'étendant sur une partie d'une largeur de dent (Bz) et orientées vers l'intérieur de la poulie dentée (1) pour l'évacuation de corps étrangers ou d'impuretés,
dans laquelle la poulie dentée (1) comporte une nervure de guidage (6) s'étendant dans la direction circonférentielle (U) pour le guidage de la courroie dentée dans une direction axiale (X), la poulie dentée (1) comprenant
au moins une entretoise (4) disposée, dans la direction circonférentielle (U), entre deux dents (3), l'entretoise (4) étant conçue pour recevoir au moins partiellement une tête de dent (10) de la courroie dentée,
**caractérisée en ce que**
la nervure de guidage (6) comporte un chanfrein d'entrée s'étendant dans la direction radiale (R).

2. Poulie dentée (1) selon la revendication 1,
**caractérisée en ce que**
une largeur de l'entretoise (4) est inférieure à la largeur de dent (Bz).

3. Poulie dentée (1) selon l'une quelconque des revendications précédentes,
**caractérisée en ce que**
l'entretoise (4) relie deux dents (3).

4. Poulie dentée (1) selon l'une quelconque des revendications précédentes, **caractérisée en ce que**
la nervure de guidage (6) relie deux dents (3).

5. Poulie dentée (1) selon l'une quelconque des revendications précédentes, **caractérisée en ce que**
la hauteur de la nervure de guidage (6) dans la direction radiale (R) est au plus égale à la hauteur des dents (3).

6. Poulie dentée (1) selon l'une quelconque des revendications précédentes, **caractérisée en ce que**
la nervure de guidage (6) comporte des évidements (8) pour l'évacuation des saletés.

7. Poulie dentée (1) selon l'une quelconque des revendications précédentes, **caractérisée en ce que**
la poulie dentée (1) comprend un corps de poulie (7) à partir duquel les dents (3) de la poulie dentée (1) sont réalisées en porte à faux dans la direction axiale (X) d'un seul côté ou des deux côtés.

8. Transmission par courroie dentée comprenant une poulie dentée (1) selon l'une quelconque des revendications 1 à 7 et une courroie dentée, la courroie dentée présentant une rainure s'étendant dans la direction circonférentielle (U),
la nervure de guidage (6) de la poulie dentée (1) étant conçue pour s'engager dans la rainure de la courroie dentée et pour guider la courroie dentée dans la direction axiale (X).

9. Véhicule à deux roues comprenant une transmission par courroie dentée selon la revendication 8.
